# EUROPÄISCHE PATENTSCHRIFT

(11) **EP 3 857 099 B1**
(45) Veröffentlichungstag und Bekanntmachung des Hinweises auf die Patenterteilung: **26.07.2023**
(21) Anmeldenummer: 19779799.6
(22) Anmeldetag: 24.09.2019
(51) Int. Cl.: F16J 3/02, F16K 17/12, F16K 37/00, G06K 19/077

(54) **MEMBRAN FÜR EIN MEMBRANVENTIL ODER STELLVENTIL MIT EINER LASCHE UND EINEM TRANSPONDER**
DIAPHRAGM FOR A DIAPHRAGM VALVE OR ACTUATOR VALVE WITH A TAB AND A TRANSPONDER
MEMBRANE POUR UNE SOUPAPE À MEMBRANE OU UNE SOUPAPE DE RÉGLAGE COMPRENANT UNE LANGUETTE ET UN TRANSPONDEUR

(30) Priorität: 25.09.2018 DE 102018123545
(43) Veröffentlichungstag der Anmeldung: 04.08.2021
(73) Patentinhaber: Samson Aktiengesellschaft, 60314 Frankfurt am Main (DE); SED Flow Control GmbH, 74906 Bad Rappenau (DE)
(72) Erfinder: EHMIG, Uwe, 74177 Bad Friedrichshall (DE); RUTSCH, Uwe, 74906 Bad Rappenau (DE)
(74) Vertreter: Köllner & Partner mbB
(86) Internationale Anmeldenummer: PCT/EP2019/075726
(87) Internationale Veröffentlichungsnummer: WO 2020/064742

(56) Entgegenhaltungen:
- EP-A1- 1 583 029
- EP-A1- 2 242 004
- EP-A1- 3 025 077
- EP-A1- 3 382 238
- EP-A1- 3 388 143
- EP-A1- 3 412 947
- EP-A1- 3 569 905
- EP-A2- 2 077 519
- EP-B1- 2 242 004
- EP-B1- 3 025 077
- DE-A1-102013 214 304
- DE-A1-102017 128 229
- DE-U1-202018 105 500
- DE-U1-202018 105 892
- US-A1- 2009 212 912
- US-A1- 2015 129 660
- US-A1- 2018 163 895

## Beschreibung

### Gebiet der Erfindung

Die Erfindung betrifft eine Membran für ein Membranventil oder Stellventil, wobei die Membran in dem Membranventil oder Stellventil zum Steuern des Durchflusses dient, sowie auch entsprechende Membran- und auch Stellventile mit einer solchen Membran.

Membranventile besitzen als Ventilglied eine Membran zum Regulieren einer Flüssigkeit oder eines Gases. Das Membranmaterial ist sorgfältig entsprechend der Fluide und der Umgebungsbedingungen ausgelegt. Membranventile gleicher Bauart können mit Membranen aus unterschiedlichen Materialien ausgerüstet werden. Derartige Ventile werden oft für pharmazeutische Anwendungen oder solche im Lebensmittel-Bereich eingesetzt, insbesondere für aseptische Anwendungen.

Zur eindeutigen Identifikation und/oder zum Nachweis der Konformität zu technischen Regelwerken können an einer solchen Membran Daten aufgedruckt oder eingeprägt sein.

Moderne EDV-Systeme besitzen elektronische Lesegeräte zum schnellen Erfassen der Daten von Komponenten oder Geräten. Häufig werden für diesen Zweck an den Komponenten oder Geräten passive Transponder verwendet, welche keinerlei Versorgung benötigen. Diese werden vor der Auslieferung programmiert und können jederzeit ausgelesen werden.

### Stand der Technik

Eine Membran mit einer Lasche, in der ein Datenträger (z.B. ein RFID-Transponder) untergebracht ist, ist in der Druckschrift EP 3 025 077 B1 beschrieben. Dabei bestehen die Membran und insbesondere die Lasche aus mehreren Lagen und Schichten, und der Datenträger ist zwischen diesen Lagen und Schichten in die Struktur der Lasche eingebettet.

Nachteilig ist daran vor allem, dass der Datenträger bereits bei der Produktion der Membran in diese integriert wird. Nachträgliche Änderungen und/oder Korrekturen sind nicht möglich, und bei Fehlern am Datenträger ist auch die komplette Membran als Ausschuss zu betrachten. Ferner ist die Einbettung des Datenträgers in die Lasche der Membran nicht ganz einfach, da sie unbedingt vollständig dicht sein muss, um den Schutz des Datenträgers vor ggf. harten Umwelteinflüssen sicherzustellen. Das bedeutet zusätzliche Anforderungen an die Anordnung der Lagen und Schichten, aus denen die Membran besteht. Zudem ist eine äußere Beschriftung, also ein Aufdrucken bzw. Prägen der Membran mit relevanten Daten, immer noch erforderlich. Auch falls die Prägung / Beschriftung nicht mit dem Inhalt des Datenträgers übereinstimmt, ist eine nachträgliche Korrektur nicht mehr möglich, und die Membran kann nicht verwendet werden.

### Aufgabe

Aufgabe der Erfindung ist es, die Möglichkeiten zur Kennzeichnung und Identifikation bei Membranen für Membran- oder Stellventile zu verbessern.

### Lösung

Diese Aufgabe wird durch den Gegenstand der unabhängigen Ansprüche 1 und 3 gelöst. Vorteilhafte Weiterbildungen des Gegenstands des unabhängigen Anspruchs sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Zur Lösung der Aufgabe wird eine Membran für ein Membranventil oder Stellventil vorgeschlagen, wobei die Membran in dem Membranventil oder Stellventil zum Steuern des Durchflusses dient. An der Membran ist eine Lasche derart ausgebildet ist, dass sie über die Membranfläche hinausragt. Die Lasche weist zur Fixierung eines Transponders mindestens eine Aussparung auf, wobei der Transponder von einer abgeschlossenen Hülle aus Kunststoff, Elastomer oder Silikon umhüllt und mit Hilfe der mindestens einen Aussparung an der Lasche fixiert ist.

Die Aussparung erlaubt dabei, den von einer abgeschlossenen Hülle umgebenen Transponder von außen an der Lasche der Membran zu fixieren. Es ist also nicht notwendig, den Transponder bereits bei der Produktion der Membran in die innere Struktur der Membran zu integrieren, sondern der Transponder kann separat, zu einem beliebigen anderen Zeitpunkt gefertigt und mit Daten bestückt werden. Diese Daten können auf den Zustand, Verwendungszweck o.ä. der Membran abgestimmt sein, wobei sie erst zu einem späteren Zeitpunkt festgelegt werden müssen. Durch die abgeschlossene Hülle ist der Transponder dennoch vor Umwelt- und/oder Prozesseinflüssen geschützt. Dieser Schutz ist wiederum unabhängig von der speziellen Struktur bzw. Ausgestaltung der Membran. Es ist also insbesondere nicht notwendig, die verschiedenen möglicherweise vorhandenen Schichten und/oder Lagen, aus denen die Membran bestehen kann, so aufeinander abzustimmen, dass ein zwischen ihnen eingeschlossener Transponder besonders geschützt ist. Stattdessen können die Schichten für den vorgesehenen Verwendungszweck der Membran optimal konfiguriert werden.

Üblicherweise ist die Lasche so angeordnet, dass sie nach Einbau der Membran in ein Membranventil oder Stellventil aus dem Ventilgehäuse hinausragt. Dadurch kann die dort angebrachte Information ab- und/oder ausgelesen werden, ohne das Ventilgehäuse zu öffnen, also insbesondere, ohne den Betrieb zu unterbrechen.

Vorzugsweise ist der Transponder passiv, es kann z.B. ein handelsüblicher RFID-Chip verwendet werden. Diese sind kostengünstig und vielseitig.

Alternativ dazu kann auch ein aktiver Transponder verwendet werden. Diese haben eine größere Reichweite, verlangen aber eine Batterie o.ä. als Energieversorgung.

Zum Ablesen von Informationen über die Membran auch ohne entsprechendes Lesegerät kann auf der Lasche eine Beschriftung oder ein Barcode oder ein Data-Matrix- oder ein QR-Code angebracht sein.

Alternativ dazu wird allerdings bevorzugt, dass auf der abgeschlossenen Hülle des Transponders eine Beschriftung oder ein Barcode oder ein Data-Matrix- oder ein QR-Code angebracht ist. Diese Beschriftung kann nach der Produktion der Membran, also unabhängig vom Produktionsprozess der Membran, erfolgen. Außerdem kann der Transponder im Falle einer fehlerhaften Kennzeichnung in seiner abgeschlossenen Hülle an der Membran ausgetauscht werden.

Die Herstellung ist besonders günstig, wenn die abgeschlossene Hülle des Transponders durch Umspritzen des Transponders hergestellt wurde.

In einer bevorzugten Ausgestaltung der Membran nach Anspruch 1 handelt es sich bei der mindestens einen Aussparung um ein Loch oder eine Bohrung oder Öffnung. Der umhüllte Transponder wird in diese Aussparung eingepresst. Das Loch bzw. die Bohrung oder Öffnung in der Lasche kann z.B. mittels einer Lochzange erzeugt werden.

Nach Anspruch 1 wird die Befestigung des Transponders an der Lasche der Membran besonders erleichtert, wenn die abgeschlossene Hülle des Transponders eine Mehrzahl von Vorsprüngen aufweist, von denen nach dem Einpressen in die Aussparung mindestens einer oberhalb und mindestens einer unterhalb der Lasche angeordnet sind. Dabei rasten die Vorsprünge bei dem Einpressen formschlüssig. Diese Vorsprünge können als komplett umlaufende Umrandungen gestaltet oder alternativ dazu unterbrochen sein und fixieren die abgeschlossene Hülle des Transponders in dem Loch bzw. der Bohrung oder Öffnung in der Lasche.

Der umhüllte Transponder kann mittels Sicherungskleber in der Aussparung der Lasche der Membran zusätzlich gesichert sein. Dann ist es nicht möglich, ihn zu entfernen, ohne Spuren zu hinterlassen, so dass ein zusätzlicher Schutz vor Manipulationen vorliegt.

Bei einer anderen Ausführungsform nach dem unabhängigen Anspruch 3 besitzt die abgeschlossene Hülle des Transponders eine Öffnung, welche die Lasche der Membran umschließt, wobei die Hülle des Transponders in die mindestens eine Aussparung in der Lasche der Membran einrastet. Typischerweise liegen zwei Aussparungen an den gegenüberliegenden Rändern der Lasche der Membran vor, und die Hülle des Transponders umschließt die Lasche derart, dass die Ränder der Öffnung in der Hülle des Transponders sich in diesen Aussparungen befinden. Diese Ausführung ist besonders vorteilhaft, wenn die Lasche sehr klein ist.

Die Aufgabe wird zudem durch ein Membranventil mit einer Membran, wie sie weiter oben beschrieben wurde, gelöst.

Auch ein Stell-, Regel- oder Prozessventil mit einer Membran, wie sie weiter oben beschrieben wurde, löst die Aufgabe.

Dieses Stell-, Regel- oder Prozessventil ist insbesondere für aseptische Anwendungen geeignet.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine Membran mit einer Lasche gemäß dem Stand der Technik;
- Fig. 2: einen Schnitt durch eine Ausführungsform, bei der der umhüllte Transponder in die Öffnung in der Lasche eingepresst ist;
- Fig. 3: einen Schnitt durch ein nicht erfindungsgemäßes Beispiel, bei der die abgeschlossene Hülle des Transponders einen Bolzen und ein Gegenstück mit Mitteln zum Verrasten des Bolzens aufweist, wobei die abgeschlossene Hülle und das Gegenstück durch ein Filmscharnier verbunden sind;
- Fig. 4: einen Schnitt durch ein nicht erfindungsgemäßes Beispiel, bei der die abgeschlossene Hülle des Transponders einen Nagel aufweist, mit dem die Lasche durchstoßen wurde, und einen selbsthemmenden Sicherungsring, mit dem das Ende des Nagels fixiert wird;
- Fig. 5A: eine schematische 3D-Darstellung einer Lasche mit Aussparungen; und
- Fig. 5B: eine schematische 3D-Darstellung einer Ausführungsform, bei der die abgeschlossene Hülle des Transponders eine Öffnung hat, welche die Lasche der Membran umschließt, wobei die Hülle des Transponders in Aussparungen in der Lasche der Membran einrastet.

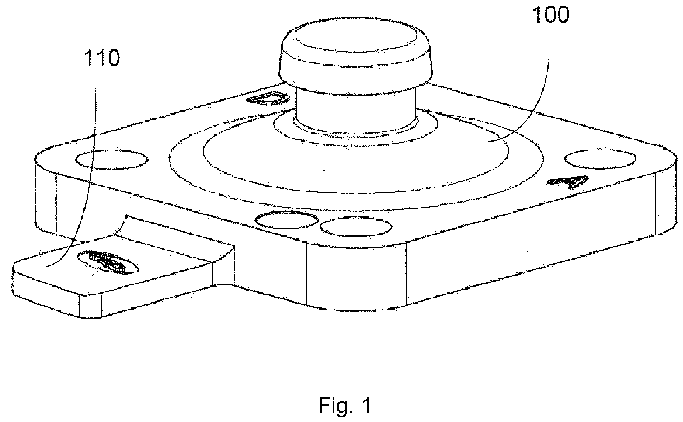

Fig. 1 zeigt eine Membran 100, wie sie aus dem Stand der Technik für den Einsatz in einem Membranventil bekannt ist. Die Membran hat eine Lasche 110, die in der Regel einen Aufdruck oder eine Prägung hat, die relevante Daten über die Membran enthält.

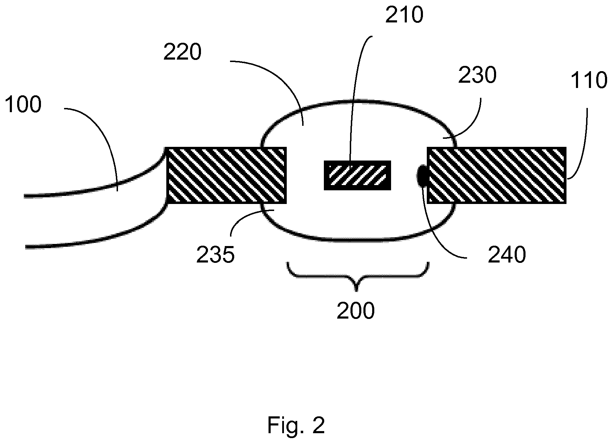

In Fig. 2 ist eine Membran 100 mit einer Lasche 110 dargestellt. In der Lasche ist ein Loch bzw. eine Öffnung 200 vorhanden, in die der umhüllte Transponder 210 eingepresst ist. Bei dem Transponder handelt es sich vorzugsweise um einen handelsüblichen RFID-Chip. Die abgeschlossene Hülle 220 des Transponders kann hierbei vorzugsweise durch Umspritzen des Transponders erzeugt werden. Die Hülle 220 ist dabei so gestaltet, dass Vorsprünge 230, 235 existieren, die die Hülle 220 beim Einpressen in die Öffnung 200 dort einrasten lassen und gegen unbeabsichtigtes Herausfallen sichern. Als zusätzliche Sicherung kann zwischen den Vorsprüngen, genauer an den Stellen, die mit dem Innenrand der Öffnung 200 in der Lasche110 in Kontakt kommen, ein Sicherungskleber 240 vorgesehen sein (z.B. Loctite o.ä.).

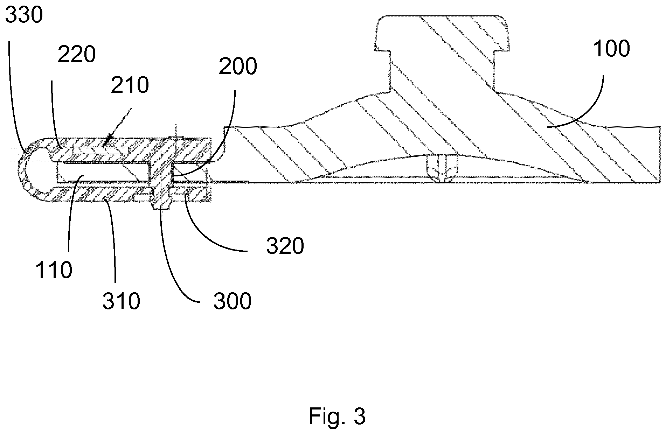

Auch in Fig. 3 ist eine Membran 100 mit einer Lasche 110 zu sehen, in der eine Öffnung 200 vorhanden ist. Die abgeschlossene Hülle 220 des Transponders 210 weist hier allerdings einen Bolzen 300 auf, der durch die Öffnung 200 gesteckt wurde. Der Bolzen 300 verrastet mit dem Rastmittel 320 am Gegenstück 310 zu der Hülle 220, welche mit einem Filmscharnier 330 verbunden sind, so dass die Lasche 110 von außen umschlossen wird. Vorzugsweise sind die Hülle 220, der Bolzen 300, das Gegenstück 310, das Rastmittel 320 sowie das Filmscharnier 330 einstückig aus demselben Material hergestellt. Dabei kann es sich z.B. um einen geeigneten Kunststoff handeln, der z.B. mittels eines Spritzgussverfahrens oder mittels 3D-Druck in Form gebracht werden kann.

An der abgeschlossenen Hülle 220 des Transponders kann auch eine Fläche für Beschriftungszwecke vorgesehen sein. Dort kann z.B. auch ein QR-, Data-Matrix- oder Barcode aufgebracht sein.

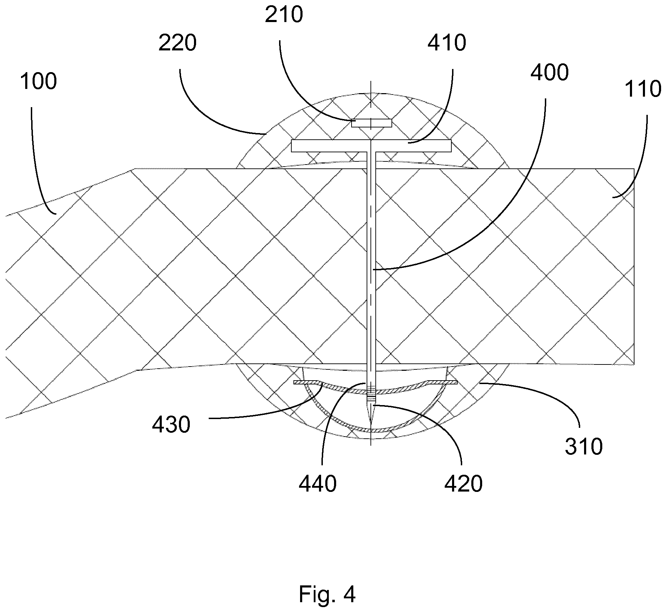

Fig. 4 zeigt eine Membran 100 mit einer Lasche 110, bei der ein Loch 200 dadurch erzeugt wurde, dass ein Nagel 400 durch die Lasche hindurchgestoßen wurde. Der Nagel besteht typischerweise aus einem Metall oder einem anderen hinreichend festen Werkstoff. Das Kopfende 410 des Nagels befindet sich neben dem Transponder 210 innerhalb der abgeschlossenen Hülle 220 des Transponders. Diese wird typischerweise durch Umspritzen der beiden Teile mit einem geeigneten Kunststoff, Silikon o.ä. erzeugt. Das spitze Ende 420 des Nagels, das auf der anderen Seite über die Lasche hinausragt, wird dort mittels eines Sicherungsrings 430 fixiert. Dabei handelt es sich vorzugsweise um einen metallischen Sicherungsring, der bevorzugt selbsthemmend ausgeführt ist. Dieser Sicherungsring 430 ist seinerseits von einer Hülle 310 als Gegenstück umgeben, die vorzugsweise aus demselben Stoff besteht wie die Hülle 220 des Transponders. Der Sicherungsring kann in diese Hülle eingesteckt sein, wobei er in entsprechende Vertiefungen einrasten kann. Es ist aber auch möglich, z.B. den Sicherungsring mit einer Metallplatte als innerer Abdeckung zu versehen, so dass das kombinierte Element aus Sicherungsring und Metallplatte zur Herstellung des Gegenstücks 310 umspritzt werden kann. Außerdem kann der Nagel 400 Rillen, Rändelungen 440 oder ähnliche Unregelmäßigkeiten aufweisen, die eine bessere Fixierung des Nagels im Sicherungsring ermöglichen.

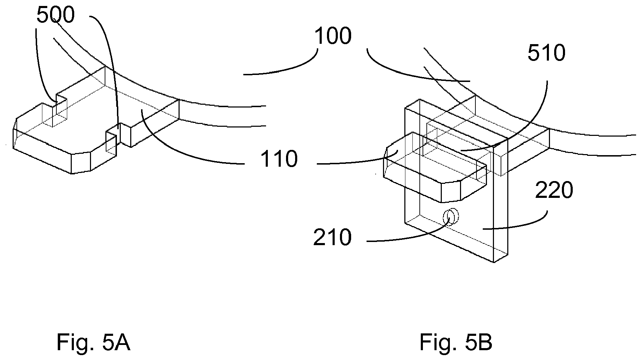

Fig. 5A zeigt eine schematische 3D-Darstellung einer Membran 100 mit einer Lasche 110 mit zwei Aussparungen 500 zum Verrasten eines Transponders, die seitlich am Außenrand der Lasche liegen. Wie in Fig. 5B dargestellt, weist die abgeschlossene Hülle 220 des Transponders 210 ihrerseits eine Öffnung 510 auf, die die Lasche umschließt. Die Ränder der Öffnung 510 rasten dabei in die Aussparungen 500 der Lasche 110 ein.

### Glossar

### Transponder

Ein Transponder ist ein Funk-Kommunikationsgerät, das eingehende Signale aufnimmt und automatisch beantwortet bzw. weiterleitet.

### passiver Transponder

Unter passiven Transpondern versteht man Systeme, die zur Kommunikation und zur Abarbeitung interner Prozesse benötigte Energie ausschließlich aus dem Feld der Sende-/Empfangseinheit beziehen. Passive Transponder benötigen keine eigene Stromversorgung, können aber nur auf kurze Distanzen arbeiten. Bekannteste Bauart ist die Radio Frequency Identification (RFID). Typische Anwendungen sind die Identifizierung von Objekten, Haustierregistrierungs-Chips oder Chipkarten und Schlüsselanhänger für ein Zugangs-Kontrollsystem. Ein aktiver Sensor (in Verbindung mit einem Computer) liest und decodiert die Daten, die der passive Transponder sendet.

### aktiver Transponder

Aktive Transponder verfügen über eine eigene Energieversorgung. Entweder haben sie eine eingebaute Batterie (oder z.B. einen Kondensator) oder werden an ein externes Stromnetz angeschlossen. Dadurch sind nicht nur größere Kommunikationsreichweiten möglich, auch die Verwaltung größerer Datenspeicher bzw. der Betrieb integrierter Sensorik wird realisierbar. Einfache aktive Transponder werden zum Beispiel bei der Identifizierung von Flugzeugen verwendet: Der im Flugzeug eingebaute Transponder empfängt ein kodiertes Signal einer Überwachungs- und Kontrollstelle und beantwortet dieses Signal auf einer vorgegebenen Frequenz. Dieses Antwortsignal wird von der Überwachungsstelle empfangen und mit dem Radarecho zusammen dargestellt.

### Bezugszeichen

- 100: Membran
- 110: Lasche
- 200: Öffnung
- 210: Transponder
- 220: abgeschlossene Hülle des Transponders
- 230: oberer Vorsprung
- 235: unterer Vorsprung
- 240: Sicherungskleber
- 300: Bolzen
- 310: Gegenstück
- 320: Rastmittel
- 330: Filmscharnier
- 400: Nagel
- 410: Kopfende des Nagels
- 420: Spitze des Nagels
- 430: Sicherungsring
- 440: Rillen oder Rändelungen
- 500: seitliche Aussparung
- 510: Öffnung in Hülle

### zitierte Literatur

zitierte Patentliteratur
EP 3025077 B1

## Patentansprüche

1. Membran (100) für ein Membranventil oder Stellventil,
1.1 wobei die Membran (100) in dem Membranventil oder Stellventil zum Steuern des Durchflusses dient;
1.2 wobei an der Membran (100) eine Lasche (110) derart ausgebildet ist, dass sie über die Membranfläche hinausragt; wobei die Membran einen Transponder umfasst;
1.3 wobei die Lasche (110) zur Fixierung des Transponders (210) mindestens eine Aussparung (200; 500) aufweist;
1.4 wobei der Transponder (210) von einer abgeschlossenen Hülle (220) aus Kunststoff, Elastomer oder Silikon umhüllt ist;
1.5 wobei der umhüllte Transponder mit Hilfe der mindestens einen Aussparung (200; 500) an der Lasche (110) fixiert ist
1.6 wobei es sich bei der mindestens einen Aussparung (200) um ein Loch oder eine Bohrung oder Öffnung handelt;
1.7 wobei der umhüllte Transponder (210, 220) in die Aussparung (200) eingepresst wird; und
1.8 wobei die abgeschlossene Hülle (220) des Transponders eine Mehrzahl von Vorsprüngen (230, 235) aufweist,
1.8.1 von denen nach dem Einpressen in die Aussparung (200) mindestens einer (230) oberhalb und mindestens einer (235) unterhalb der Lasche angeordnet sind;
1.9 wobei die Vorsprünge (230, 235) bei dem Einpressen formschlüssig rasten.

2. Membran (100) nach dem vorhergehenden Anspruch,
**dadurch gekennzeichnet,**
**dass** der umhüllte Transponder mittels Sicherunaskleber (240) in der Aussparung (200) zusätzlich gesichert wird.

3. Membran (100) für ein Membranventil oder Stellventil,
3.1 wobei die Membran (100) in dem Membranventil oder Stellventil zum Steuern des Durchflusses dient;
3.2 wobei an der Membran (100) eine Lasche (110) derart ausgebildet ist, dass sie über die Membranfläche hinausragt;
wobei die Membran einen Transponder umfasst; 3.3 wobei die Lasche (110) zur Fixierung des Transponders (210) mindestens eine Aussparung (200; 500) aufweist;
3.4 wobei der Transponder (210) von einer abgeschlossenen Hülle (220) aus Kunststoff, Elastomer oder Silikon umhüllt ist;
3.5 wobei der umhüllte Transponder mit Hilfe der mindestens einen Aussparung (200; 500) an der Lasche (110) fixiert ist;
3.6 wobei die abgeschlossene Hülle (220) des Transponders eine Öffnung (510) besitzt;
3.7 wobei die Öffnung (510) der abgeschlossenen Hülle des Transponders die Lasche (110) der Membran umschließt; und
3.8 wobei die Hülle (220) des Transponders in die mindestens eine Aussparung (500) in der Lasche (110) der Membran einrastet.

4. Membran (100) nach einem der vorhergehenden Ansprüche,
**dadurch gekennzeichnet,**
**dass** die Lasche (110) nach Einbau der Membran (100) in ein Membranventil oder Stellventil aus dem Ventilgehäuse hinausragt.

5. Membran (100) nach einem der vorhergehenden Ansprüche,
**dadurch gekennzeichnet,**
**dass** der Transponder (210) passiv ist.

6. Membran (100) nach einem der Ansprüche 1 bis 4,
**dadurch gekennzeichnet,**
**dass** der Transponder (210) aktiv ist.

7. Membran (100) nach einem der vorhergehenden Ansprüche,
**dadurch gekennzeichnet,**
**dass** auf der Lasche (110) eine Beschriftung oder ein Barcode oder ein Data-Matrix- oder ein QR-Code angebracht ist.

8. Membran (100) nach einem der Ansprüche 1 bis 64,
**dadurch gekennzeichnet,**
**dass** auf der abgeschlossenen Hülle (220) des Transponders eine Beschriftung oder ein Barcode oder ein Data-Matrix- oder QR-Code angebracht ist.

9. Membran (100) nach einem der vorhergehenden Ansprüche,
**dadurch gekennzeichnet,**
**dass** die abgeschlossene Hülle (220) des Transponders durch Umspritzen des Transponders (210) hergestellt wurde.

10. Membranventil mit einer Membran (100) nach einem der vorhergehenden Ansprüche.

11. Stell-, Regel- oder Prozessventil mit einer Membran (100) nach einem der Ansprüche 1 bis 49.

12. Ventil nach dem vorhergehenden Anspruch, wobei das Ventil für aseptische Anwendungen ausgelegt ist.

## Claims

1. Diaphragm (100) for a diaphragm valve or control valve,
1.1 wherein the diaphragm (100) in the diaphragm valve or control valve serves to control the flow;
1.2 wherein a tab (110) is formed on the diaphragm (100) such that it projects beyond the diaphragm surface; wherein the diaphragm comprises a transponder;
1.3 wherein the tab (110) has at least one recess (200; 500) for fixing the transponder (210);
1.4 wherein the transponder (210) is encased by a sealed cover (220) made of plastic, elastomer or silicone;
1.5 wherein the encased transponder is fixed to the tab (110) by means of the at least one recess (200; 500);
1.6 wherein the at least one recess (200) is a hole or bore or opening;
1.7 wherein the encased transponder (210, 220) is pressed into the recess (200); and
1.8 wherein the enclosed cover (220) of the transponder has a plurality of protrusions (230, 235),
1.8.1 at least one of which (230) is located above the tab and at least one of which (235) is located below the tab after being pressed into the recess (200);
1.9 wherein the projections (230, 235) engage positively when pressed in.

2. Diaphragm (100) according to the preceding claim,
**characterized in that**
the encased transponder is additionally secured in the recess (200) by means of securing adhesive (240).

3. Diaphragm (100) for a diaphragm valve or control valve,
3.1 wherein the diaphragm (100) in the diaphragm valve or control valve serves to control the flow;
3.2 wherein a tab (110) is formed on the diaphragm (100) such that it projects beyond the diaphragm surface;
wherein the diaphragm comprises a transponder; 3.3 wherein the tab (110) has at least one recess (200; 500) for fixing the transponder (210);
3.4 wherein the transponder (210) is encased by a sealed cover (220) made of plastic, elastomer or silicone;
3.5 wherein the encased transponder is fixed to the tab (110) by means of the at least one recess (200; 500);
3.6 wherein the sealed cover (220) of the transponder has an opening (510);
3.7 wherein the opening (510) of the closed envelope of the transponder encloses the tab (110) of the membrane; and
3.8 wherein the cover (220) of the transponder snaps into the at least one recess (500) in the tab (110) of the membrane.

4. Diaphragm (100) according to any one of the preceding claims,
**characterized in that**
the tab (110) protrudes from the valve housing after installation of the diaphragm (100) in a diaphragm valve or control valve.

5. Diaphragm (100) according to any one of the preceding claims,
**characterized in that**
the transponder (210) is passive.

6. Diaphragm (100) according to any one of claims 1 to 4,
**characterized in that**
that the transponder (210) is active.

7. Diaphragm (100) according to any one of the preceding claims,
**characterized in that**
a label or a barcode or a data matrix code or a QR code is applied to the tab (110).

8. Diaphragm (100) according to any one of claims 1 to 6,
**characterized in that**
a label or a barcode or a data matrix code or a QR code is applied to the sealed cover (220) of the transponder.

9. Diaphragm (100) according to any one of the preceding claims,
**characterized in that**
the sealed cover (220) of the transponder was produced by overmolding the transponder (210).

10. Diaphragm valve comprising a diaphragm (100) according to any one of the preceding claims.

11. Control, regulating or process valve with a diaphragm (100) according to any one of claims 1 to 9.

12. Valve according to the preceding claim, wherein the valve is designed for aseptic applications.

## Revendications

1. Membrane (100) pour une soupape à membrane ou une soupape de positionnement,
1.1 dans laquelle la membrane (100) sert à commander le flux dans la soupape de positionnement ou la soupape à membrane ;
1.2 dans laquelle une languette (110) est formée sur la membrane (100) de telle sorte qu'elle dépasse de la surface de la membrane ; dans laquelle la membrane comprend un transpondeur ;
1.3 dans laquelle la languette (110) comprend au moins un évidement (200 ; 500) pour la fixation du transpondeur (210) ;
1.4 dans laquelle le transpondeur (210) est enveloppé par une enveloppe fermée (220) en plastique, en élastomère ou en silicone ;
1.5 dans laquelle le transpondeur enveloppé est fixé à la languette (110) à l'aide de l'au moins un évidement (200 ; 500) ;
1.6 dans laquelle ledit au moins un évidement (200) est un trou ou un alésage ou une ouverture ;
1.7 dans laquelle le transpondeur enveloppé (210, 220) est pressé dans l'évidement (200) ; et
1.8 dans laquelle l'enveloppe fermée (220) du transpondeur comprend une pluralité de saillies (230, 235),
1.8.1 dont au moins une (230) est disposée au-dessus de la languette et au moins une (235) est disposée au-dessous de la languette après l'insertion à force dans l'évidement (200) ;
1.9 dans laquelle les saillies (230, 235) s'enclenchent par complémentarité de forme lors de l'enfoncement.

2. Membrane (100) selon la revendication précédente,
**caractérisée en ce**
**que** le transpondeur enveloppé est en outre fixé dans l'évidement (200) au moyen d'une colle de sécurité (240).

3. Membrane (100) pour une soupape à membrane ou une soupape de positionnement,
3.1 dans laquelle la membrane (100) dans la soupape de positionnement ou la soupape à membrane sert à commander le flux ;
3.2 dans laquelle une languette (110) est formée sur la membrane (100) de telle sorte qu'elle dépasse la surface de la membrane ;
dans laquelle la membrane comprend un transpondeur ;
3.3 dans laquelle la languette (110) comprend au moins un évidement (200 ; 500) pour la fixation du transpondeur (210) ;
3.4 dans laquelle le transpondeur (210) est enveloppé par une enveloppe fermée (220) en matière plastique, en élastomère ou en silicone ;
3.5 dans laquelle le transpondeur enveloppé est fixé à la languette (110) à l'aide de l'au moins un évidement (200 ; 500) ;
3.6 dans laquelle l'enveloppe fermée (220) du transpondeur possède une ouverture (510)
3.7 dans laquelle l'ouverture (510) de l'enveloppe fermée du transpondeur entoure la languette (110) de la membrane ; et
3.8 dans laquelle l'enveloppe (220) du transpondeur s'enclenche dans l'au moins un évidement (500) de la languette (110) de la membrane.

4. Membrane (100) selon l'une quelconque des revendications précédentes,
**caractérisée en ce**
**que** la languette (110) fait saillie hors du corps de soupape après l'installation de la membrane (100) dans une soupape à membrane ou une soupape de positionnement.

5. Membrane (100) selon l'une des revendications précédentes,
**caractérisé en ce**
**que** le transpondeur (210) est passif.

6. Membrane (100) selon l'une des revendications 1 à 4,
**caractérisée en ce**
**que** le transpondeur (210) est actif.

7. Membrane (100) selon l'une des revendications précédentes,
**caractérisée en ce**
**qu'**une inscription ou un code à barres ou un code Data Matrix ou un code QR est appliqué sur la languette (110).

8. Membrane (100) selon l'une des revendications 1 à 6,
**caractérisée en ce**
**qu'**une inscription ou un code à barres ou un code Data Matrix ou QR est appliqué sur l'enveloppe fermée (220) du transpondeur.

9. Membrane (100) selon l'une quelconque des revendications précédentes,
**caractérisé en ce**
**que** l'enveloppe fermée (220) du transpondeur a été réalisée par surmoulage du transpondeur (210).

10. Soupape à membrane comprenant une membrane (100) selon l'une des revendications précédentes.

11. Soupape de réglage, de régulation ou de procès avec une membrane (100) selon l'une des revendications 1 à 9.

12. Soupape selon la revendication précédente dans laquelle la soupape est conçue pour des applications aseptiques.
